# FASCICULE DE BREVET EUROPEEN

(11) **EP 1 011 954 B1**
(45) Date de publication et mention de la délivrance du brevet: **01.10.2003**
(21) Numéro de dépôt: 98917250.7
(22) Date de dépôt: 26.03.1998
(51) Int. Cl.: B29C 51/14, B32B 27/12, B29C 51/00

(54) **PROCEDE POUR LA FABRICATION D'UN OBJET TRIDIMENSIONNEL TEXTILE EN FORME**
VERFAHREN ZUR HERSTELLUNG EINES GEFORMTEN DREIDIMENSIONALEN TEXTILGEGENSTANDS
METHOD FOR MAKING A SHAPED THREE-DIMENSIONAL TEXTILE OBJECT

(30) Priorité: 28.03.1997 FR 9704102
(43) Date de publication de la demande: 28.06.2000
(73) Titulaire: LAFUMA S.A., F-26140 Anneyron (FR)
(72) Inventeur: CHARPENTIE, Lionnel, F-73230 Thoiry (FR); LE GAL, Yann, F-38340 Voreppe (FR)
(74) Mandataire: Vuillermoz, Bruno
(86) Numéro de dépôt international: FR9800622
(87) Numéro de publication internationale: WO98043799

(56) Documents cités:
- EP-A- 0 027 338
- DE-A- 2 037 309
- FR-A- 2 135 727
- GB-A- 576 499
- GB-A- 1 532 467
- US-A- 3 505 443
- US-A- 3 759 776
- US-A- 4 375 445
- US-A- 5 406 646

## Description

### Domaine technique

L'invention concerne un procédé pour la fabrication d'un objet textile tridimensionnel en forme ; avantageusement, elle vise également un procédé du type en question dans lequel le support textile est également enduit d'une couche de matière plastique souple.

### Techniques antérieures

La fabrication de tels objets tridimensionnels par thermoformage ou par thermocompression à partir d'une étoffe, éventuellement associée à une mousse de matière thermoplastique, est bien connue.

En pratique, pour obtenir une rigidité satisfaisante de l'ensemble, il faut faire appel à des couches de mousse épaisses dont le poids est fréquemment de une fois et demi à deux fois le poids du tissu. De la sorte, le complexe réalisé est assez lourd, ce qui en limite les applications. En outre, le complexe tridimensionnel réalisé est assez rigide, ce qui entraîne des difficultés de manipulations lorsque l'on doit le confectionner. Enfin, les couches de mousse étant fragiles, la face interne du complexe doit être protégée, par exemple par un tricot, ce qui alourdit encore plus le poids et le prix de ces produits.

Dans le document US-A-3 505 443, on a décrit un procédé du type en question qui consiste dans un premier temps à chauffer un tissu enduit, par exemple d'une couche de polychlorure de vinyle (PVC), à une température suffisante pour ramollir ladite couche d'enduction, puis dans un deuxième temps, à appliquer le vide sur une forme tridimensionnelle sans étirer le support textile, et enfin, dans un troisième temps, à couper le vide.

Ce procédé de thermocompression dans lequel le poinçon est fixe, est peu adapté industriellement à une matière textile et en outre nécessite des durées importantes de refroidissement.

Dans le document EP-B-0 0 027 338, on a proposé de faire appel à un tissu à base de fibres thermofixables, associé à une couche d'enduction élastique, de préférence une couche de mousse à cellules ouvertes, puis de chauffer le moule au moins à la température de fixation de la fibre textile, puis de transférer l'ensemble dans un moule plus froid pour fixer les points de liage du tissu, et enfin de remplir le volume obtenu d'une mousse expansée.

Ce procédé conduit à des complexes épais, manquant de souplesse. Par ailleurs, le remplissage d'un volume par de la mousse expansée conduit à créer une face plane sur la face opposée à celle mise en forme. Enfin, ce procédé donne des produits volumineux pleins, et non des coques, et par là, des produits incompressibles, difficiles à transporter.

L'invention pallie ces inconvénients. Elle vise un procédé pour la fabrication d'objets tridimensionnels textiles en forme qui soit facile à fabriquer, notamment de manière automatisable, reste souple après mise en forme, ce qui autorise et facilite les opérations de confection.

### Description sommaire de l'invention

Le procédé selon l'invention pour la fabrication d'un objet textile tridimensionnel souple en forme consiste :
- tout d'abord, à chauffer un support textile thermoplastique ;
- puis, à placer ce support textile dans un moule comprenant un poinçon épousant les contours de l'objet tridimensionnel en forme à réaliser ;
- puis, sous l'effet d'une pression, à appliquer le support textile chaud contre ledit poinçon ;
- et enfin, après refroidissement, à retirer l'objet tridimensionnel en forme ainsi réalisé ;
et dans lequel,
- le support textile est un tissu chaîne et trame présentant une capacité d'étirage dans les deux directions principales d'au moins 20 % ; et
- les fils constituant le tissu sont des fils thermoplastiques à filaments continus présentant une capacité d'étirage irréversible à une température légèrement inférieure à celle de ramollissement d'au moins 20 %.

Le procédé se caractérise :
- en ce que le tissu est tendu sur un cadre avant d'être chauffé, de manière à présenter dans son plan une tension identique dans toutes les directions ;
- en ce qu'on chauffe ce tissu tendu à une température légèrement inférieure à la température de ramollissement des fils ;
- et en ce que la mise en forme irréversible par le poinçon est effectuée au moyen d'un poinçon associé à une matrice de guidage rigide présentant une ouverture correspondant au jeu près à la plus grande section du poinçon.

En d'autres termes, l'invention consiste en une sélection particulière des conditions opératoires, respectivement :
- tout d'abord dans les capacités d'étirage du tissu et des fils le constituant,
- ensuite, dans le fait de tendre le tissu de manière isotropique dans son plan,
- et enfin, à chauffer ce tissu tendu au plus près de la température de ramollissement du fil sans jamais dépasser celle-ci.

Dans la suite de la description et dans les revendications, par « capacité d'étirage du fil», on désigne l'aptitude d'un fil à multifilaments thermoplastiques à pouvoir être étiré, à une température légèrement inférieure à celle de ramollissement, de manière permanente pour compléter son orientation moléculaire sans entraîner la rupture de ce fil ou l'aptitude d'un tissu réalisé à partir de ce fil à pouvoir être déformé de manière permanente dans ses deux directions principales sans toutefois se rompre, les fils de chaîne et de trame glissant les uns par rapport aux autres.

Selon une première caractéristique de l'invention, il importe que le support textile soit réalisé dans un tissu chaîne et trame présentant une double capacité d'étirage d'au moins 20 % en développé linéaire, dans ses deux directions principales, respectivement des fils le constituant et du tissu lui-même d'au moins 20 %.

En effet, on a observé que si chacune de ces caractéristiques de capacité d'étirage étaient inférieures à 20 %, on était beaucoup trop limité dans les volumes obtenus. Dans ce cas, pour obtenir des volumes importants, il est nécessaire d'utiliser des pièces de très grande taille, ce qui génère beaucoup de chutes et rend le prix de revient du procédé très élevé.

De même, si cette capacité excède 50 %, le procédé perdait beaucoup de ses avantages du fait d'une perte dans les propriétés fonctionnelles du tissu, telle que notamment la résistance à la déchirure amorcée.

On a observé que l'on obtenait de bons résultats si la capacité d'étirage des fils et du tissu était comprise dans la fourchette de 25 à 40 % en développé linéaire.

Avantageusement, le tissu est réalisé en une armure unie ou toile carrée ou en une armure sergé, notamment en un sergé 2 lie 2, ou en armure satin.

De même, on obtient de bons résultats avec des fils synthétiques extensibles, tels que notamment des fils texturés fausse torsion, avantageusement en polyester, notamment texturés à partir de fils en polyester POY (pre-oriented yarns) (de tels fils POY sont décrits notamment dans le document FR-A-2 151 896 ou dans ses corespondants américains US-A-3 771 162 et 3 772 872 de E.I DU PONT DE NEMOURS.

Selon une deuxième caractéristique de l'invention, le tissu doit être tendu sur un cadre, notamment sur un cadre circulaire, voire rectangulaire, à l'instar d'un tambour avant d'être chauffé et ce, de manière à présenter dans son plan une tension isotrope dans toutes les directions.

Cette caractéristique est utile pour éviter les glissements du tissu lorsqu'il est entraîné par le poinçon, ce qui provoquerait la formation de plis.

Selon une troisième caractéristique de l'invention, on chauffe le tissu à une température légèrement inférieure à la température de ramollissement des fils le constituant, sans toutefois dépasser cette température pour ne pas détruire le réseau du tissu. Cette caractéristique est utile pour profiter au maximum de la capacité d'étirage des fils et du tissu, puisque ces capacités sont une fonction croissante de la température. En revanche, une température trop élevée transformerait le fil en un matériau cassant.

Enfin, la combinaison de toutes ces caractéristiques permet avec succès d'obtenir une déformation contrôlée et importante, puisque de l'ordre de 20 à 50 % en développé linéaire, avantageusement de 25 à 40 %. La combinaison de toutes ces caractéristiques conduit à déformer le tissu soit dans le sens de l'étirage, soit dans le sens d'un resserrement de l'armure, ce qui est fort utile avec des formes à rayon de courbure élevée.

Dans une forme d'exécution avantageuse, le support textile est préalablement associé à une couche d'enduction souple en matière thermoplastique, telle que par exemple en polychlorure de vinyle (PVC), en polyuréthanne linéaire ou en polytétrafluoroéthylène, voire en résine acrylique. De la sorte, on améliore la mémoire de forme en bloquant la structure textile grâce à la couche d'enduction.

Dans une forme d'exécution préférée, le tissu est en fil de polyester texturé POY et l'enduit est en PVC, et le chauffage du complexe, tendu après mise sous tension isotrope, s'effectue à 190°C pendant au moins une minute.

Ce chauffage peut être effectué par radiation, enduction ou équivalent, étant précisé que la face textile du complexe tendu doit être dirigée vers la source de chaleur, alors que la face enduite chaude sera ensuite dirigée contre le poinçon.

La mise en forme s'effectue de manière connue par thermoformage, mais de préférence par thermocompression.

On a observé qu'on obtient une bonne mémoire de forme lorsque le poids de la couche d'enduction est de une fois à une fois et demi le poids du tissu déformable support.

Pour obtenir une bonne mémoire de forme, la température de ramollissement de la couche d'enduction doit être inférieure à la température de ramollissement du fil textile, de manière à ce que la couche d'enduction se liquéfie légèrement avant la déformation du tissu, pour pénétrer partiellement dans le tissu sans le traverser, afin de donner une structure composite.

Avantageusement, le refroidissement sur le poinçon est accéléré pour améliorer le phénomène de trempage et le rendement. On peut ainsi projeter de l'air froid sur l'ensemble ou même de l'eau.

Dans une forme de réalisation préférée, la déformation du tissu chaud tendu est effectuée au moyen d'un poinçon associé à une matrice de guidage présentant une ouverture, correspondant au jeu près, à la plus grande section du poinçon.

Cette disposition de poinçon avec matrice de guidage facilite l'accès du fluide de refroidissement. Elle est d'autant plus avantageuse que l'on ne comprime pas le textile ou le complexe en fond de moule, ce qui permet au textile (ou au complexe) de se déplacer librement pour adopter la forme voulue sans contraintes.

Avantageusement, le poinçon est en résine thermodurcissable bi-composante et est recouvert d'une fine de lubrifiant, par exemple en silicone, et la matrice de guidage rigide est réalisée soit dans une résine bi-composante soit en métal.

De manière surprenante, on a observé que lorsqu'on applique le procédé de l'invention à un empilement en strates d'une pluralité de tissus textiles enduits tendus, on obtient des produits tridimensionnels en forme présentant une mémoire de forme améliorée.

La manière dont l'invention peut être réalisée et les avantages qui en découlent ressortiront mieux des exemples de réalisation qui suivent à l'appui des figures annexées.

### Brève description de la figure

La figure 1 illustre une première forme de réalisation d'une installation pour la mise en oeuvre du procédé selon l'invention.
La figure 2 illustre un autre type d'installation préférée pour la mise en oeuvre du procédé selon l'invention.
Les figures 3 à 5 représentent schématiquement la mise en oeuvre de l'invention au moyen de l'installation selon la figure 2.

### Manières de réaliser l'invention

### Exemple 1

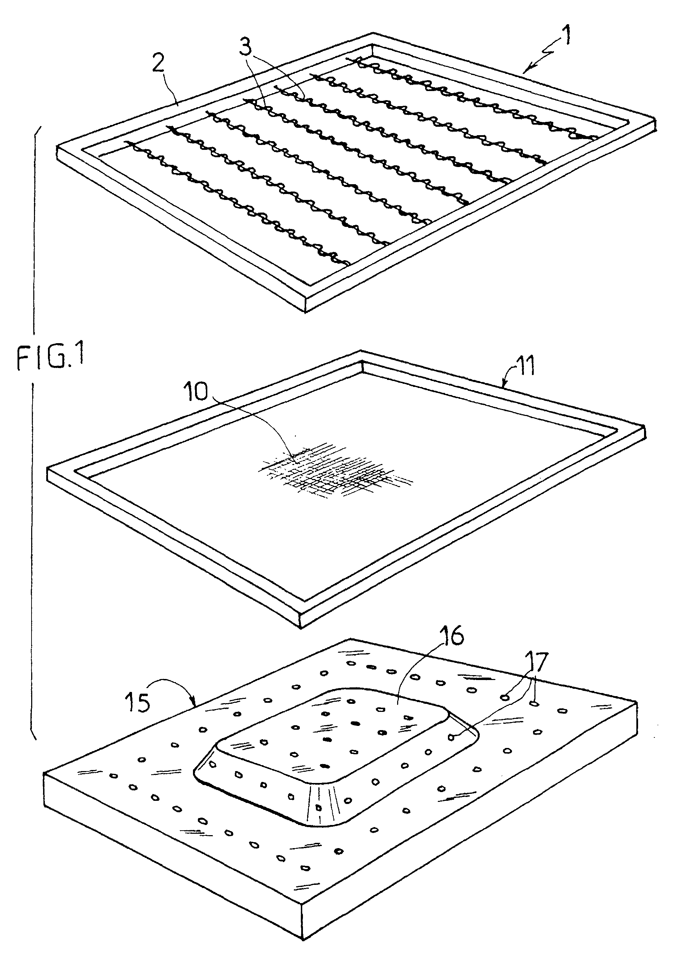

La presse thermoformée (1) (voir figure 1) comprend essentiellement :
- un organe de chauffe désigné par la référence générale (1) comprenant un cadre (2) sur lequel est tendu une pluralité de rampes (3) à infra-rouge parallèles, reliées à une source électrique non représentée ;
- un cadre de maintien (11) parallèle à l'organe de chauffage (1) sur lequel est tendu le complexe caractéristique de l'invention (10), dont la face textile est dirigée vers l'organe de chauffage (1) ;
- un moule (15) comprenant un poinçon en relief (16) et une pluralité d'orifices (17) reliés à une source de vide classique non représentée.

De manière connue, on enduit à la râcle un tissu chaîne et trame armure toile en fils polyester texturés fausse torsion à partir de fils POY pesant 230 g/m², extensible de 25 % dans les deux directions chaîne et trame, d'une couche de PVC plastifié gélifié d'usage courant pour l'enduction pesant également 230 g/m². Chaque fil texturé POY a une capacité d'étirage de 30 % environ.

On place le complexe (10) obtenu tendu dans le cadre (11) en prenant soin, comme déjà dit, de diriger la face textile vers les rampes à infra-rouge (3), de manière à ce que le ramollissement des fils synthétiques soit plus fort et précède celui de la couche d'enduction (PVC), dont le point de transition est plus bas que celui du polyester.

On chauffe en pratique à 170°C, température légèrement supérieure aux températures de transition, à la fois des fils de polyester et du PVC. Une fois que le complexe textile (10) est parfaitement chauffé de manière homogène et à coeur, par exemple au bout de cinq minutes, on descend le cadre (11) sur le moule (15) et on applique le vide à travers les orifices (17). Il s'ensuit que le complexe textile (10) dont la face enduite chaude est au contact même du moule (15), épouse parfaitement la forme du poinçon (16) en relief.

Une fois cette opération de mise en forme terminée, on laisse refroidir sur place, puis on démoule pour retirer l'objet tridimensionnel en forme souple ainsi obtenu.

### Exemple 2

On répète l'exemple 1 avec un tissu chaîne et trame armure toile en fil polyester texturé fausse torsion à partir de fils POY, pesant environ 270 g/m² extensible dans les deux directions principales chaîne et trame (c'est-à-dire sans couche d'enduction). On opère comme précédemment et dans les mêmes conditions.

On obtient un objet textile tridimensionnel en forme de moins bonne qualité, présentant une mémoire de forme limitée.

### Exemple 3

On répète l'exemple 2 en utilisant un tissu armure toile en fil de polyamide 6.6 standard. On obtient des résultats analogues à ceux de l'exemple 2. On observe en outre que la mémoire de forme s'atténue dans le temps.

### Exemple 4

On répète l'exemple 2 en utilisant un tissu en fil de polyéthylène. On obtient de bons résultats avec une bonne mémoire de forme perenne.

### Exemple 5

On répète l'exemple 1 en supprimant le chauffage.
On observe une déformation limitée et très anisotrope, rendant le produit inapte à toute utilisation.
En outre, la déformation observée ne peut excéder 13 %.

### Exemple 6

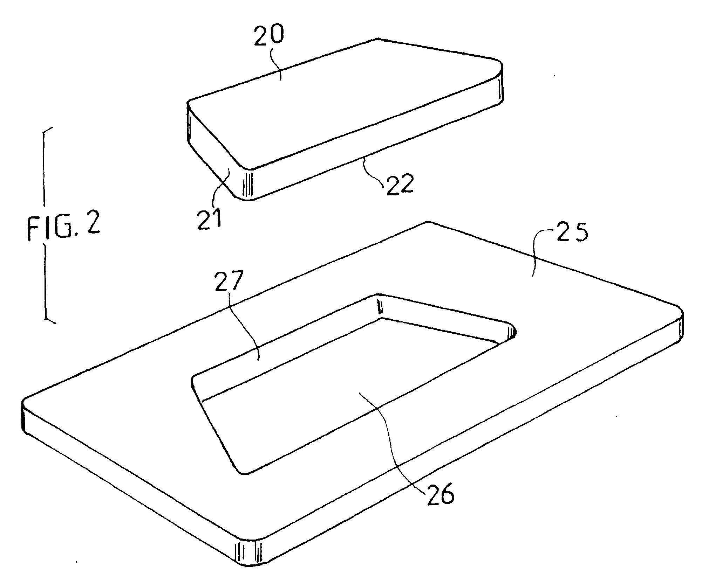

On utilise l'installation préférée illustrée à la figure 2. Cette installation se compose d'un poinçon (20) en silicone, dont le contour actif (21) présente une surface légèrement tronconique et dont la forme extérieure poncée correspond à celle de l'objet tridimensionnel à réaliser.

L'utilisation d'un poinçon en silicone, ou plus généralement en un matériau légèrement déformable facilite le glissement des fils de chaîne et de trame et/ou un resserrement de l'armure.

Ce poinçon (20) peut être également réalisé en une résine bi-composante.

Ce poinçon est associé à une matrice de guidage (25) rigide, réalisée soit en une résine bi-composants analogue à celle du poinçon, soit en un métal d'usage courant pour cette application. Cette matrice de guidage (25) présente une ouverture (26) correspondant au jeu près (dans le cas d'espèce de l'ordre de un millimètre) à la plus grande section du poinçon (20). Les bords (27) de cette ouverture (26) présentent un profil analogue et complémentaire à la face tronconique externe (21) du poinçon (20).

On chauffe à l'étuve, à 210°C environ, le poinçon (20) et la matrice de guidage (25).

Parallèlement, sur un cadre circulaire, à l'instar d'un tambour, on tend par tout moyen approprié un tissu polyester texturé fausse torsion à partir de fils POY enduit de PVC analogue à celui décrit dans l'exemple 1. Ainsi, la tension sur le tissu est isotrope, puisqu'elle est la même sur tous les rayons du complexe textile (30).

Comme précédemment, la face enduite du complexe textile (30) est dirigée contre le poinçon.

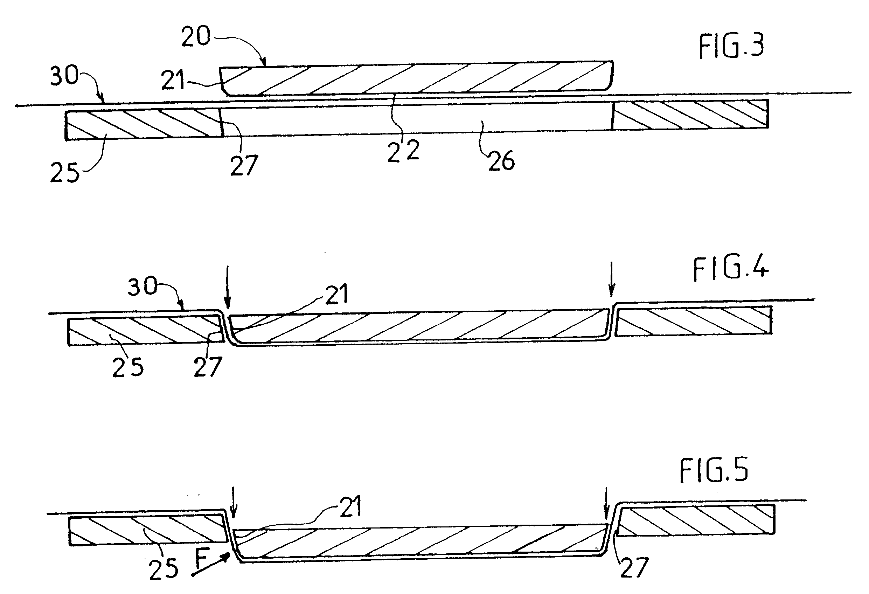

On place alors le cadre non figuré portant le tissu enduit (30) tendu sur la matrice de guidage (25) en ménageant la face enduite à l'extérieur et la face textile contre la matrice de guidage (25) (figure 3). On applique ensuite le poinçon (20) (figure 4) jusqu'à le faire traverser à travers l'ouverture (26) (figure 4), puis même à le faire traverser pour partie essentielle (figure 5). La phase de descente du poinçon au travers de la matrice de guidage (26) dure environ dix à vingt secondes.

Lorsque le poinçon (20) est en position extrême (figure 5), on le laisse en place pendant trente secondes environ, de manière à assurer la relaxation et le refroidissement du complexe enduit (30).

Dans une forme avantageuse, on peut favoriser la mémoire de forme en projetant sur le complexe encore chaud de la figure 5 un courant d'air froid ou un je d'eau symbolisé par la flèche F.

On retire ensuite le poinçon (21) vers le haut, puis l'objet tridimensionnel souple en forme ainsi réalisé.

### Exemple 7

On répète l'exemple précédent avec un poinçon (20) dont la face active (22) (voir figure 3) présente un creux ou un relief. De la sorte, en bout de course (figure 5), le poinçon vient se presser sur un contre-moule pour donner à l'objet tridimensionnel réalisé souple un décor tel qu'un logotype.

Dans une variante, le poinçon (20) peut coopérer en fin de course (figure 5) avec des contre poinçons latéraux, par exemple à came, portant des motifs appropriés.

### Exemple 8

On répète l'exemple 1 en inversant après chauffage sous tension le sens du complexe, c'est-à-dire en mettant la face textile du complexe (30) au contact du poinçon et non la face enduite.
On obtient un résultat comparable en ce qui concerne la mémoire de forme. Toutefois, la face textile n'est plus apparente, ce qui n'est pas recherché par l'usager.

### Exemple 9

On répète l'exemple 1, en ne maintenant pas le complexe tendu lors de l'emboutissage.
Le complexe enduit glisse et forme de nombreux plis, accentués par l'emboutissage. Le produit obtenu est impropre à toute utilisation.

### Exemple 10

On empile deux complexes enduits de l'exemple 1 en strates (face textile du premier complexe contre face enduite du second complexe). On tend les deux complexes ensemble et on opère comme à l'exemple 1. On obtient aisément des étirements de 25 %.
Les produits obtenus présentent une mémoire de forme nettement améliorée, aussi bien en déformations répétées, qu'en aspect et en stabilité dans le temps.
Cette technique permet avantageusement d'obtenir, de manière économique et industrielle, des formes sévères, telles que des récipients cubiques dont les parois restent bien perpendiculaires à la base.

### Exemple 11

On répète l'exemple 10 avec deux tissus enduits de même caractéristique qu'à l'exemple 1, si ce n'est que l'on a remplacé la couche d'enduction en PVC par une couche acrylique de même poids.
On obtient des résultats comparables.

### Exemple 12

On répète l'exemple 11 avec un seul tissu polyster enduit acrylique.
On obtient des pièces tridimensionnelles présentant une mémoire de forme amoindrie.

### Applications industrielles

Le procédé selon l'invention présente de nombreux avantages par rapport à ce qui était connu à ce jour. On peut citer :
- la facilité à automatiser, ce qui se traduit par une économie substantielle par rapport aux techniques faisant appel à la confection ;
- la possibilité dans une même opération de moulage, de réaliser différentes parties distinctes d'une même pièce tridimensionnelle ;
- l'absence d'assemblage par couture ou analogue, ce qui donne des produits en forme présentant une excellente étanchéité ;
- la possibilité de réaliser des formes complexes, variées et nouvelles, par rapport à celles obtenues par confection ;
- la possibilité de réaliser des marquages en relief et en couleur, notamment par transfert, lors de la conformation.

De la sorte, ce procédé peut être utilisé avec succès pour la fabrication de tout objet tridimensionnel souple constitué d'un support textile apparent, enduit sur la face envers, qui était jusqu'alors traditionnellement confectionné, tel que par exemple :
. en ameublement ou pour la fabrication de garnitures automobiles ou de sellerie ;
. la fabrication de chaussures, de capuches, de coiffes ;
. en bagagerie, pour la fabrication de cartables, de sacs à dos ;
. en confection de vêtements ou de partie de vêtements.

## Revendications

1. Procédé pour la fabrication d'un objet textile tridimensionnel souple en forme, qui consiste :
- tout d'abord, à chauffer un support textile thermoplastique (10, 30) ;
- puis, à placer ce support textile dans un moule comprenant un poinçon (16, 20) épousant les contours de l'objet tridimensionnel en forme à réaliser ;
- puis, sous l'effet d'une pression, à appliquer le support textile chaud contre ledit poinçon (16, 20) ;
- et enfin, après refroidissement, à retirer l'objet tridimensionnel en forme ainsi réalisé ;
et dans lequel
- le support textile (10, 30) est un tissu chaîne et trame présentant une capacité d'étirage dans les deux directions principales d'au moins 20 % ;
- les fils constituant le tissu (10, 30) sont des fils thermoplastiques à filaments continus présentant une capacité d'étirage irréversible à une température légèrement inférieure à celle de ramollissement d'au moins 20 % ;
**caractérisé** :
· en ce que le tissu (10, 30) est tendu sur un cadre avant d'être chauffé, de manière à présenter dans son plan une tension identique dans toutes les directions ;
· en ce qu'on chauffe ce tissu tendu à une température légèrement inférieure à la température de ramollissement des fils ;
· et en ce que la mise en forme irréversible par le poinçon est effectuée au moyen d'un poinçon (20) associé à une matrice de guidage rigide (25) présentant une ouverture (26) correspondant au jeu près à la plus grande section du poinçon (20).

2. Procédé selon la revendication 1, **caractérisé en ce que** la capacité d'étirage du fil et du tissu est comprise entre 25 % et 40 % en développé linéaire.

3. Procédé selon la revendication 1, **caractérisé en ce que** le tissu tissé chaîne et trame est en une armure unie, sergée ou satin.

4. Procédé selon la revendication 1, **caractérisé en ce que** les fils sont des fils polyester texturés fausse torsion à partir de fils POY.

5. Procédé selon la revendication 1, **caractérisé en ce que** le tissu est enduit sur un cadre circulaire ou rectangulaire.

6. Procédé selon la revendication 1, **caractérisé en ce que** le tissu (10,30) est associé à une couche d'enduction souple en matière thermoplastique, dont le point de ramollissement est inférieur au point de ramollissement des fils du tissu, de sorte que lorsque le tissu est chauffé, la couche d'enduction pénètre partiellement le tissu.

7. Procédé selon la revendication 6, **caractérisé en ce que** la face textile du complexe enduit tendu est dirigée vers la source de chaleur pendant le chauffage alors que la face enduite chaude tendue est dirigée contre le poinçon (16,20) lors de la mise en forme.

8. Procédé selon la revendication 6, **caractérisé en ce que** le refroidissement sur le poinçon (16,20) est accéléré par un jet d'air froid ou d'eau (F).

9. Procédé selon la revendication 6, **caractérisé** en ce le poinçon (20) est recouvert d'un film de silicone.

10. Procédé selon la revendication 6, **caractérisé en ce que** le textile enduit est formé par l'empilement en strates d'une pluralité de tissus enduits.

## Patentansprüche

1. Verfahren zur Herstellung eines nachgiebigen, geformten dreidimensionalen Textilgegenstandes mit folgenden Schritten:
- zuerst Erwärmen eines thermoplastischen textilen Trägermaterials (10,30);
- danach Einlegen dieses textilen Trägermaterials in eine Form, die einen Stempel (16,20) aufweist, welcher die Konturen des herzustellenden geformten, dreidimensionalen Gegenstandes annimmt;
- dann unter Druck das Aufbringen des heißen textilen Trägermaterials auf diesen Stempel (16,20);
- und schließlich, nach dem Abkühlen, Herausnehmen so hergestellten geformten dreidimensionalen Gegenstandes;
und in welchem
- das textile Trägermaterial (10,30) ein aus Kette und Schuß bestehendes Gewebe ist, das in den beiden Hauptrichtungen eine Verstreckungskapazität von mindestens 20 % aufweist;
- die das Gewebe (10,30) bildenden Fäden thermoplastische Fäden aus Endlosfilamenten sind, welche bei einer Temperatur leicht unterhalb der Erweichungstemperatur eine irreversible Verstreckbarkeit von mindestens 20 % aufweisen;
**dadurch gekennzeichnet,**
• **daß** das Gewebe (10,30) vor dem Erhitzen auf einen Rahmen gespannt wird, derart, daß seine Fläche in allen Richtungen eine gleiche Spannung aufweist;
• **daß** das vorgespannte Gewebe auf eine Temperatur leicht unterhalb der Erweichungstemperatur der Fäden erhitzt wird;
• und **daß** die irreversible Formung durch den Stempel mit mindestens einem Stempel (20) durchgeführt wird, der einer starren Führungs-Matrize (25) zugeordnet ist, die eine Ausnehmung (26) aufweist, welche mit engem Spiel dem größten Querschnitt des Stempels (20) entspricht.

2. Verfahren nach Anspruch 1, **dadurch gekennzeichnet, daß** die Verstreckungskapazität des Fadens und des Gewebes - linear abgewickelt - zwischen 25% und 40% liegt.

3. Verfahren nach Anspruch 1, **dadurch gekennzeichnet, daß** das Gewebe aus Kette und Schuß eine Leinenbindung, Köperbindung oder Atlasbindung aufweist.

4. Verfahren nach Anspruch 1, **dadurch gekennzeichnet, daß** die Fäden Polyesterfäden mit Falschdrahttexturierung sind, ausgehend von vororientiertem Garn (POY).

5. Verfahren nach Anspruch 1, **dadurch gekennzeichnet, daß** das Gewebe auf einem kreisförmigen oder rechteckigen Rahmen aufgelegt ist.

6. Verfahren nach Anspruch 1, **dadurch gekennzeichnet, daß** das Gewebe (10,30) versehen ist mit einer weichen Beschichtung aus thermoplastischem Material, dessen Erweichungspunkt unter dem Erweichungspunkt der Fäden des Gewebes liegt, derart, daß beim Erwärmen des Gewebes die Beschichtung teilweise in das Gewebe eindringt.

7. Verfahren nach Anspruch 6, **dadurch gekennzeichnet, daß** die textile Seite des gespannten beschichteten Komplexes während des Erwärmens zur Wärmequelle gerichtet ist, wogegen während des Verformens die heiße, gespannte, beschichtete Seite zum Stempel (16,20) gerichtet ist.

8. Verfahren nach Anspruch 6, **dadurch gekennzeichnet, daß** das Abkühlen auf dem Stempel (16,20) durch einen Strahl kalter Luft oder kalten Wassers (F) beschleunigt wird.

9. Verfahren nach Anspruch 6, **dadurch gekennzeichnet, daß** der Stempel (20) mit einem Siliconfilm überzogen ist.

10. Verfahren nach Anspruch 6, **dadurch gekennzeichnet, daß** das beschichtete Textil durch lagenweises Aufeinanderschichten einer Mehrzahl von beschichteten Geweben gebildet ist.

## Claims

1. Process for the manufacture of a flexible three-dimensionally shaped textile object, which consists:
- firstly, in heating a thermoplastic textile support (10, 30);
- then, in placing this textile support in a mould, which includes a punch (16, 20) that matches the contours of the three-dimensionally shaped object to be produced;
- then, under the action of pressure, in applying the hot textile support against the said punch (16, 20); and
- finally, after cooling, in removing the three-dimensionally shaped object thus produced;
and in which:
- the textile support (10, 30) is a woven fabric having a capability of stretch in the two principal directions by at least 20%;
- the constituent yarns of the fabric (10, 30) are continuous-filament thermoplastic yarns having a capability of irreversible stretch by at least 20% at a temperature slightly below the softening temperature;
**characterized**
• **in that** the fabric (10, 30) is stretched over a frame before being heated, so as to have, in its plane, the same tension in all directions;
• this tensioned fabric is heated at a temperature slightly below the softening temperature of the yarns; and
• **in that** the irreversible forming by the punch is carried out by means of a punch (20) associated with a rigid guiding die (25) having an opening (26) that corresponds, to within a clearance, to the largest cross section of the punch (20).

2. Process according to Claim 1, **characterized in that** the stretch capability of the yarn and of the fabric is between 25% and 40% in linear development.

3. Process according to Claim 1, **characterized in that** the fabric is woven with a plain, twill or satin weave.

4. Process according to Claim 1, **characterized in that** the yarns are false-twist textured polyester yarns based on POY yarns.

5. Process according to Claim 1, **characterized in that** the fabric is coated on a circular or rectangular frame.

6. Process according to Claim 1, **characterized in that** the fabric (10, 30) is combined with a flexible coating layer made of a thermoplastic, the softening point of which is below the softening point of the yarns of the fabric so that, when the fabric is heated, the coating layer partly penetrates the fabric.

7. Process according to Claim 6, **characterized in that** the textile face of the tensioned coated complex is directed towards the heat source during the heating, while the tensioned hot coated face is directed against the punch (16, 20) during the forming operation.

8. Process according to Claim 6, **characterized in that** the cooling on the punch (16, 20) is accelerated by a water or cold-air jet (F).

9. Process according to Claim 6, **characterized in that** the punch (20) is covered with a film of silicone.

10. Process according to Claim 6, **characterized in that** the coated textile is formed by the multilayer stacking of a plurality of coated fabrics.
